# FASCICULE DE BREVET EUROPEEN

(11) **EP 2 009 242 B1**
(45) Date de publication et mention de la délivrance du brevet: **20.06.2012**
(21) Numéro de dépôt: 08159045.7
(22) Date de dépôt: 25.06.2008
(51) Int. Cl.: F01D 5/26, F01D 5/16, F01D 25/06, F16F 15/12

(54) **Dispositif amortisseur pour stator de turbomachine**
Stoßdämpfervorrichtung für Stator eines Turbotriebwerks
Turbomachine stator damper device

(30) Priorité: 26.06.2007 FR 0704580
(43) Date de publication de la demande: 31.12.2008
(73) Titulaire: SNECMA, 75015 Paris (FR)
(72) Inventeur: Baumhauer, Stéphane, Jean, Joseph, 91300, Massy (FR); Dupeux, Jérôme, Alain, 77000, Vaux le Penil (FR); Garcin, François, Maurice, 75019, Paris (FR); Lombard, Jean-Pierre, François, 77830, Pamfou (FR)
(74) Mandataire: David, Daniel

(56) Documents cités:
- EP-A- 0 017 306
- EP-A- 1 074 762
- EP-A- 1 520 957
- WO-A-99/43955
- GB-A- 2 400 415
- US-A- 6 102 664

## Description

La présente invention concerne le domaine des turbomachines, en particulier celui des moteurs à turbine à gaz tels que les turboréacteurs ou les turbopropulseurs, et vise un dispositif amortisseur de vibrations pour des pièces statoriques.

Les turbomachines aéronautiques sont composées d'une pluralité des roues aubagées mobiles, c'est-à-dire de disques rotatifs à la périphérie desquels sont fixées des aubes mobiles dans un flux gazeux, coopérant avec des roues aubagées fixes formant des redresseurs ou des distributeurs de flux gazeux selon qu'il s'agit de compresseur ou de turbine. Ces derniers peuvent être composés d'ensembles en forme de secteurs d'anneau comprenant plusieurs aubes chacun, ou d'aubes unitaires, par exemple à calage variable. Ces composants sont des pièces particulièrement sensibles car elles doivent répondre en termes de dimensionnement à des impératifs de tenue mécanique à la température et au chargement aérodynamique tout en assurant l'étanchéité de la veine de gaz. L'ensemble de ces aspects fait que ces structures sont chargées statiquement et que, comte tenu des impératifs de durée de vie, les amplitudes de vibrations qu'elles subissent doivent rester faibles.

La conception et la mise au point d'une turbomachine impliquant la coordination de plusieurs disciplines, le processus de dimensionnement est itératif. Le dimensionnement vibratoire est effectué afin d'éviter la présence de modes critiques dans la plage de fonctionnement. L'ensemble est validé à la fin du cycle de conception par un essai moteur sur lequel les amplitudes vibratoires sont mesurées. Il apparaît parfois de forts niveaux induits soit par des réponses forcées synchrones ou asynchrones ; soit par des instabilités. La conception des redresseurs ou des distributeurs doit alors être refaite ce qui est particulièrement long et coûteux.

L'objectif sur le plan industriel est donc de prédire au plus tôt, dans le cycle de dimensionnement, les niveaux de réponse vibratoire des structures afin de pouvoir prendre les mesures correctives qui s'imposent le plus en amont dans la conception. Parmi ces axes, l'amortissement mécanique est un enjeu important pour les concepteurs.

Pour garantir la robustesse de ces pièces vis-à-vis de la fatigue vibratoire, une solution consiste à ajouter sur la structure des dispositifs spécifiques faisant office de sources de dissipation d'énergie. On connaît par exemple par le document EP 1 253 290 un moyen d'amortissement sur des aubes de roue mobile de compresseur. Il comporte une couche de matériau viscoélastique et une couche de contrainte. Le profil des aubes se trouvant dans la veine d'écoulement des gaz, la solution proposée dans ce document prévoit de creuser une encoche dans le profil des aubes et d'y loger les moyens amortisseurs. La surface des profils d'aubes en contact avec l'écoulement ne présente ainsi pas d'irrégularité et l'écoulement du gaz n'est pas perturbé. Un tel agencement nécessite un usinage délicat en raison de la faible épaisseur de l'aube. De plus, il existe un risque d'introduire un déséquilibre entre les différentes aubes d'une même roue conduisant à un balourd.

Un stator avec les caractéristiques du préambule de la revendication 1 est connu du document EP 1 520 957.

La présente invention a pour objectif d'atténuer les réponses dynamiques d'une structure sous sollicitation synchrone ou asynchrone, d'origine aérodynamique ou non par un apport d'amortissement dynamique.

Le stator de turbomachine formant redresseur ou distributeur, conforme à l'invention, comprenant une pluralité d'aubes disposées radialement entre un premier anneau intérieur et un deuxième anneau extérieur, les deux anneaux étant concentriques, le deuxième anneau présentant une portion de surface extérieure cylindrique, est caractérisé par le fait que sur la dite portion de surface extérieure est fixé au moins un stratifié d'amortissement de vibrations, le stratifié comprenant au moins une couche de matériau viscoélastique en contact avec ladite portion de surface et une contre couche de matériau rigide.

L'originalité de la présente invention repose sur l'emploi de stratifiés composés d'au moins une couche de matière viscoélastique avec au mois une couche de contrainte, lesdits stratifiés étant collés sur la structure de manière à dissiper l'énergie vibratoire de la pièce.

La dissipation de l'énergie vibratoire est obtenue par déformation en cisaillement du matériau viscoélastique, entre la structure qui se déforme sous sollicitation dynamique et la couche de contrainte entraînée par inertie. Ces stratifiés sont collés ou fixés à l'extérieur des redresseurs ou distributeurs en secteurs, sur la couronne extérieure et amortissent directement les modes de vibrations des pièces considérées.

L'invention permet d'accroître l'amortissement structural d'une pièce métallique et de résoudre un problème vibratoire rencontrée en conception : ceci a pour conséquence en final de réduire les temps de développement et des mises au point associées et donc de réduire les coûts.

Elle autorise également l'élargissement des domaines de conception classiques bornés par la satisfaction des prestations de tenue aux charges alternées et indirectement des gains de masse.

L'invention est applicable quel que soit le type de chargement dynamique : croisement avec des harmoniques moteurs, excitation asynchrone ou acoustique, instabilité aéroélastique ou excitation par contact rotor-stator.

Selon les différents modes de réalisation,
- Le stratifié recouvre partiellement, axialement ou circonférentiellement ladite portion de surface extérieure.
- Le redresseur respectivement distributeur comprend une pluralité de stratifiés répartis circonférentiellement sur la portion de surface extérieure.
- Les couches sont liées entre elles.
- Les couches sont liées entre elles par collage.
- La contre-couche comprend un organe de fixation mécanique.
- L'organe de fixation mécanique relie la contre couche au redresseur ou distributeur.
- L'organe de fixation mécanique maintient la couche viscoélastique en appui contre ladite portion de surface extérieure.
- Le stratifié est constitué d'un empilement de couches viscoélastiques et de couches rigides alternées.
- Les caractéristiques du matériau viscoélastique varient d'une couche à l'autre.
- Les caractéristiques du matériau viscoélastique sont les mêmes d'une couche à l'autre.
- Les caractéristiques du matériau rigide varient d'une couche rigide à l'autre.
- Les caractéristiques du matériau rigide sont les mêmes d'une couche rigide à l'autre.

L'invention porte aussi sur une turbomachine comprenant au moins un tel redresseur ou distributeur. Il peut s'agir d'un distributeur d'étage de turbine ou d'un redresseur d'étage de compression.

D'autres caractéristiques et avantages ressortiront de la description qui suit de divers modes de réalisation de l'invention en référence aux dessins annexés sur lesquels :
La figure 1 représente schématiquement un turboréacteur en coupe axiale susceptible d'incorporer un stator de l'invention ;
La figure 2 représente en coupe un stratifié d'amortissement selon l'invention ;
La figure 3 représente un secteur de stator vu en perspective équipé d'un stratifié d'amortissement conformément à l'invention ;
La figure 4 montre un autre mode de réalisation de l'invention.

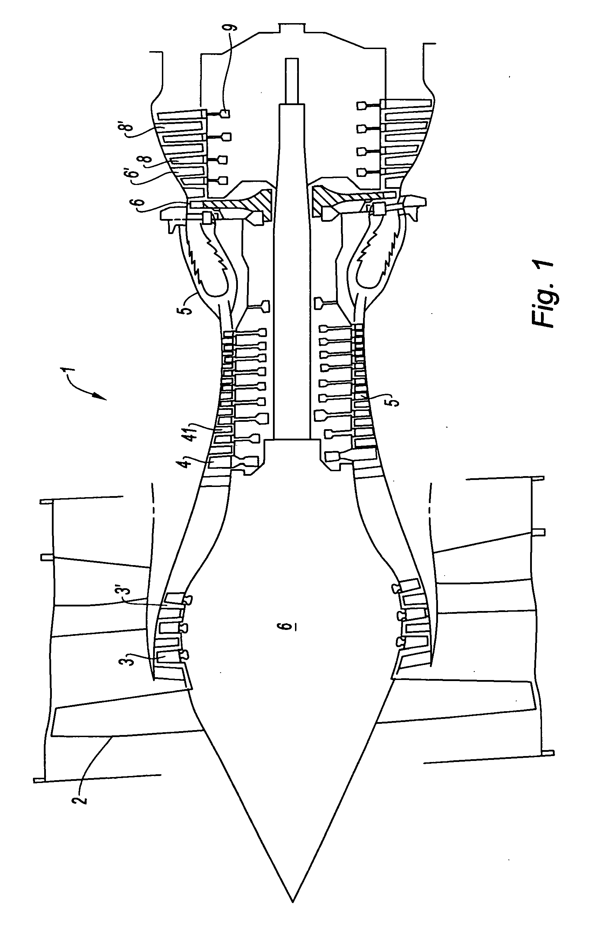

En se référant à la figure 1, on a représenté de manière schématique un exemple de turbomachine sous la forme d'un turboréacteur 1 double flux et à double corps. Une soufflante 2 à l'avant alimente le moteur en air. L'air comprimé par la soufflante est partagé en deux flux concentriques. Le flux secondaire est évacué directement dans l'atmosphère et fourni une part essentielle de la poussée motrice. Le flux primaire est guidé à travers plusieurs étages de compression vers la chambre de combustion où il est mélangé au carburant et brûlé. Les gaz chauds alimentent les différents étages de turbine qui entraînent la soufflante et les étages de compression. Les gaz sont ensuite évacués dans l'atmosphère.

Un tel moteur comprend plusieurs roues de redresseur : une roue en aval de la soufflante pour redresser le flux secondaire avant son éjection, des roues entre les roues mobiles des compresseurs et des distributeurs entre les roues des turbines aussi bien à haute pression qu'à basse pression.

Conformément à l'invention, on dispose de stratifiés d'amortissement de vibrations sur les portions de surface extérieures d'au moins une partie des anneaux extérieurs des redresseurs ou distributeurs.

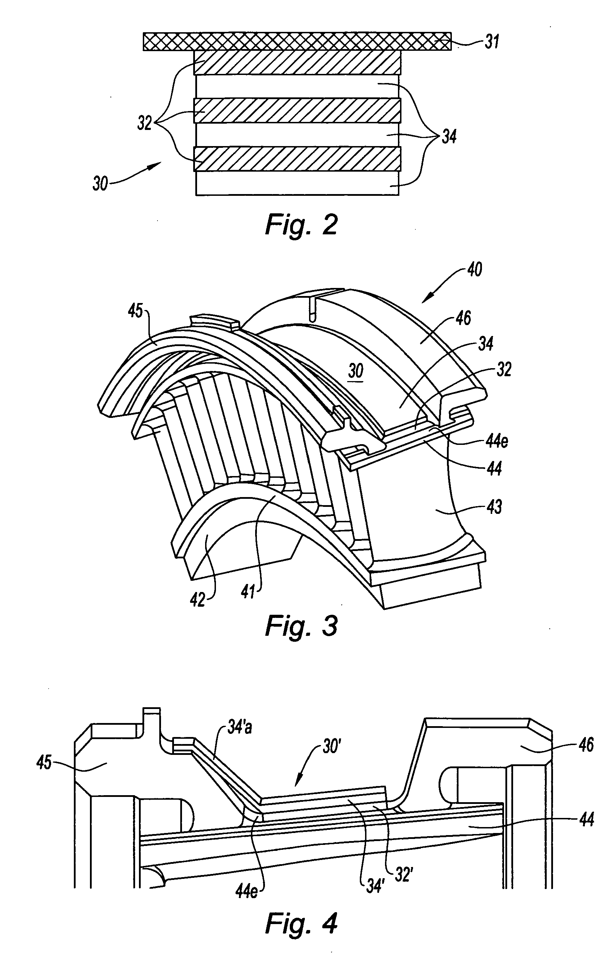

Comme on le voit sur la figure 2, un stratifié 30 se présente sous la forme d'une pluralité de couches empilées les unes sur les autres. Selon une forme de réalisation, le stratifié comporte une couche 32 d'un matériau viscoélastique et une contre couche 34 d'un matériau rigide. Le stratifié est appliqué par la couche viscoélastique 32 à la surface 31 d'une structure à amortir.

La viscoélasticité est une propriété d'un solide ou d'un liquide qui lorsqu'il est déformé montre un comportement à la fois visqueux et élastique par une dissipation et un stockage simultanés d'énergie mécanique.

Les caractéristiques, isotropes ou anisotropes, d'élasticité du matériau rigide de la contre couche 34 sont supérieures à celles, isotropes ou anisotropes du matériau viscoélastique dans la plage de fonctionnement thermique et fréquentielle souhaitée. A titre d'exemple non limitatif, le matériau de la couche 34 peut être de type métallique ou composite, et la matériau de la couche 32 de type caoutchouc, silicone, polymère, verre ou résine époxy. Le matériau doit être efficace en terme de dissipation d'énergie dans la configuration attendue correspondant à des plages de températures et de fréquences déterminées. Il est choisi à partir de ses modules caractéristiques de cisaillement, exprimés en déformation et vitesse.

Selon d'autres formes de réalisation le stratifié comporte plusieurs couches 32 de matériau viscoélastique et plusieurs contre couches de matériau rigide 34, qui sont disposées de façon alternée. L'exemple de la figure 2 montre de façon non limitative un stratifié d'amortissement ayant trois couches 32 de matériau viscoélastique et trois contre couches 34 de matériau rigide. Selon les applications, les couches de matériau viscoélastique 32 et les contre couches de matériau rigide 34 sont d'égales dimensions ou de dimensions différentes. Lorsque le stratifié comporte plusieurs couches 32, celles-ci peuvent présenter toutes les mêmes caractéristiques mécaniques ou bien présenter des caractéristiques mécaniques différentes. Lorsque le stratifié comporte plusieurs contre couches 34, celles-ci peuvent présenter toutes les mêmes caractéristiques mécaniques ou bien présenter des caractéristiques mécaniques différentes. Les couches 32 et les contre couches 34 sont fixées les unes aux autres de préférence par adhésion au moyen d'un film de colle ou par polymérisation.

Sur la figure 3 on a représenté un premier mode de réalisation. Le secteur de stator 40, ici un secteur de distributeur de turbine, comprend un élément d'anneau radialement intérieur 41 supportant un élément d'étanchéité 42 d'un côté et formant la paroi intérieure de la veine de gaz de l'autre côté. Une pluralité d'aubes 43 s'étendent radialement depuis l'élément d'anneau 41 jusqu'à l'élément d'anneau radialement extérieur 44. L'élément 44 forme d'un côté la paroi extérieure de la veine de gaz balayant les aubes 43. L'élément d'anneau 44 comprend des organes de fixation amont et aval 45 et 46. La surface extérieure 44e de l'élément 44 est de forme sensiblement cylindrique. Le stratifié 30, constitué de deux couches : 32 viscoélastique et 34 contre-couche rigide 34, est fixée sur cette portion de surface 44e. Le stratifié 30 est fixé par collage ou polymérisation de la couche viscoélastique sur la portion de surface 44 e. Ce stratifié s'étend sur une portion axiale de la portion de surface 44 e. de préférence elle s'étend circonférentiellement sur tout le secteur. Lorsque les secteurs 40 sont montés dans le carter de la turbine, ils forment une roue complète de distributeur avec les stratifiés amortisseur sur toute la circonférence de la surface extérieure de distributeur.

En fonctionnement, les modes de vibrations des secteurs de redresseur ou de distributeur mais aussi les modes de vibrations des aubes sont amortis par les stratifiés sans perturber le flux aérodynamique dans la veine de gaz.

Sur la figure 4, on a représenté un deuxième mode de réalisation. Le secteur de redresseur ou de distributeur vu en coupe axiale sur la portion de l'élément radialement extérieur 44 est le même que précédemment avec un élément d'anneau intérieur 41 et un élément d'anneau extérieur 44. Le stratifié d'amortissement 30' comprend ici aussi une couche viscoélastique 32' et une contre couche 34' rigide. La différence porte sur le mode de liaison avec le secteur de redresseur respectivement distributeur. La contre-couche rigide 34' comprend un prolongement latéral 34a' qui prend appui sur une partie plus massive et épaisse de l'élément d'anneau extérieur 44. Il s'agit selon cet exemple de l'organe de fixation amont 45. Le prolongement latéral 34a' est boulonné ou fixé par un autre moyen sur l'organe de fixation 45. Par ce moyen on garantit une meilleure tenue du stratifié d'amortissement pendant les différents événements auquel le stator est amené à résister. Dans ce cas le stratifié n'est pas nécessairement collé sur la surface extérieure de la potion d'anneau 44. La fixation mécanique assure une pression du stratifié contre cette surface de telle manière que lorsque des vibrations surviennent celles-ci soient transmises à la couche viscoélastique. Comme dans le cas précédent la solution de l'application d'un stratifié d'amortissement viscoélastique sur l'anneau extérieur du stator peut être adaptée selon les circonstances.

## Revendications

1. Stator de turbomachine formant redresseur ou distributeur comprenant une pluralité d'aubes (43) disposées radialement entre un premier anneau intérieur (42) et un deuxième anneau extérieur (44), les deux anneaux étant concentriques, le deuxième anneau présentant une portion de surface extérieure (44 e) cylindrique, **caractérisé par le fait que** sur la dite portion de surface extérieure (44 e) est fixé au moins un stratifié (30, 30') d'amortissement de vibrations, le stratifié comprenant au moins une couche de matériau viscoélastique (32) en contact avec ladite portion de surface (44 e) et une contre couche de matériau rigide (34).

2. Stator selon la revendication précédente, dont le stratifié recouvre partiellement ladite portion de surface extérieure (44 e).

3. Stator selon la revendication 1, comprenant une pluralité de stratifiés répartis circonférentiellement sur la portion de surface extérieure.

4. Stator selon l'une des revendications précédentes, dont les couches (32, 34) sont liées entre elles.

5. Stator selon la revendication précédente, dont les couches (32, 34) sont liées entre elles par collage.

6. Stator selon l'une des revendications précédentes, dont la contre-couche (34') comprend un organe de fixation mécanique (34'a).

7. Stator selon la revendication précédente dont l'organe de fixation mécanique (34'a) relie la contre couche au stator.

8. Stator selon la revendication précédente dont l'organe de fixation mécanique (34'a) maintient la couche viscoélastique en appui contre ladite portion de surface extérieure.

9. Stator selon l'une des revendications précédentes dont le stratifié est constitué d'un empilement de couches viscoélastiques et de couches rigides alternées (32, 34).

10. Stator selon la revendication précédente, dont les caractéristiques du matériau viscoélastique varient d'une couche à l'autre.

11. Stator selon la revendication 9, dont les caractéristiques du matériau viscoélastique sont les mêmes d'une couche à l'autre.

12. Stator selon l'une des revendications 9 à 11, dont les caractéristiques du matériau rigide varient d'une couche rigide à l'autre.

13. Stator selon la revendication 12, dont les caractéristiques du matériau rigide sont les mêmes d'une couche rigide à l'autre.

14. Turbomachine comprenant au moins un Stator selon l'une des revendications précédentes.

## Claims

1. A turbomachine stator forming a stator vane ring or upstream guide vane element comprising a plurality of vanes (43) placed radially between a first inner ring (42) and a second outer ring (44), the two rings being concentric, the second ring having a cylindrical outer surface portion (44 e), wherein, on said outer surface portion (44 e), at least one vibration-damping laminate (30, 30') is attached, the laminate comprising at least one layer of viscoelastic material (32) in contact with said surface portion (44 e) and one counterlayer of rigid material (34).

2. The stator as claimed in the preceding claim, wherein the laminate partially covers said outer surface portion (44 e).

3. The stator as claimed in claim 1, comprising a plurality of laminates distributed circumferentially over the outer surface portion.

4. The stator as claimed in one of the preceding claims, wherein the layers (32, 34) are connected together.

5. The stator as claimed in the preceding claim, wherein the layers (32, 34) are connected together by bonding.

6. The stator as claimed in one of the preceding claims, wherein the counterlayer (34') comprises a mechanical attachment member (34'a).

7. The stator as claimed in the preceding claim, wherein the mechanical attachment member (34'a) connects the counterlayer to the stator.

8. The stator as claimed in the preceding claim, wherein the mechanical attachment member (34'a) keeps the viscoelastic layer pressing against said outer surface portion.

9. The stator as claimed in one of the preceding claims, wherein the laminate consists of a stack of viscoelastic layers and alternating rigid layers (32, 34).

10. The stator as claimed in the preceding claim, wherein the characteristics of the viscoelastic material vary from one layer to the other.

11. The stator as claimed in claim 9, wherein the characteristics of the viscoelastic material are the same from one layer to the other.

12. The stator as claimed in one of claims 9 to 11, wherein the characteristics of the rigid material vary from one rigid layer to the other.

13. The stator as claimed in claim 12, wherein the characteristics of the rigid material are the same from one rigid layer to the other.

14. A turbomachine comprising at least one stator as claimed in the preceding claims.

## Patentansprüche

1. Stator eines Turbinentriebwerks, der einen Gleichrichter oder einen Verteiler bildet, umfassend eine Vielzahl an Leitschaufeln (43), die radial zwischen einem ersten Innenring (42) und einem zweiten Außenring (44) angeordnet sind, wobei die beiden Ringe konzentrisch angeordnet sind, und der zweite Ring einen zylindrischen Außenflächenabschnitt (44e) aufweist, durch die Tatsache **gekennzeichnet**, dass auf dem besagten Außenflächenabschnitt (44e) zumindest ein Schichtpressstoff (30, 30') zur Schwingungsdämpfung befestigt ist, und der Schichtpressstoff zumindest eine Schicht aus viskoelastischem Material (32) umfasst, das den besagten Flächenabschnitt (44e) berührt und eine Furnierschicht aus steifem Material (34).

2. Stator nach dem vorherigen Anspruch, dessen Schichtpressstoff den besagten Außenflächenabschnitt (44e) teilweise abdeckt.

3. Stator nach Anspruch 1, umfassend eine Vielzahl an Schichtpressstoffen, die über den Umfang des Außenflächenabschnittes verteilt sind.

4. Stator nach einem der vorherigen Ansprüche, dessen Schichten (32, 34) miteinander verbunden sind.

5. Stator nach dem vorherigen Anspruch, dessen Schichten (32, 34) durch Verkleben miteinander verbunden sind.

6. Stator nach einem der vorherigen Ansprüche, dessen Furnierschicht (34') eine mechanische Befestigungsvorrichtung (34'a) umfasst.

7. Stator nach dem vorherigen Anspruch, dessen mechanische Befestigungsvorrichtung (34'a) die Furnierschicht mit dem Stator verbindet.

8. Stator nach dem vorherigen Anspruch, dessen mechanische Befestigungsvorrichtung (34'a) die viskoelastische Schicht gegen den besagten Außenflächenabschnitt drückt.

9. Stator nach einem der vorherigen Ansprüche, dessen Schichtpressstoff sich abwechselnd aus einem Stapel an viskoelastischen Schichten und steifen Schichten (32, 34) zusammensetzt.

10. Stator nach dem vorherigen Anspruch, bei dem die Merkmale des viskoelastischen Materials von einer Schicht zur anderen variieren.

11. Stator nach Anspruch 9, bei dem die Merkmale des viskoelastischen Materials von einer Schicht zur anderen dieselben sind.

12. Stator nach einem der Ansprüche 9 bis 11, bei dem die Merkmale des steifen Materials von einer steifen Schicht zur anderen variieren.

13. Stator nach Anspruch 12, bei dem die Merkmale des steifen Materials von einer steifen Schicht zur anderen dieselben sind.

14. Turbinentriebwerk umfassend zumindest einen Stator nach einem der vorherigen Ansprüche.
